# EUROPÄISCHE PATENTANMELDUNG

(11) **EP 4 485 142 A1**
(43) Veröffentlichungstag der Anmeldung: **01.01.2025**
(21) Anmeldenummer: 23181790.9
(22) Anmeldetag: 27.06.2023
(51) Int. Cl.: G06F 3/01

(54) **VERFAHREN ZUM KOMMUNIZIEREN ZWISCHEN EINER ERSTEN PERSON UND EINER ZWEITEN PERSON MITTELS EINES KOMMUNIKATIONSSYSTEMS, COMPUTERPROGRAMMPRODUKT, COMPUTERLESBARES SPEICHERMEDIUM SOWIE KOMMUNIKATIONSSYSTEM**

(71) Anmelder: Siemens Aktiengesellschaft, 80333 München (DE)
(72) Erfinder: Glas, Sylvia, 81739 München (DE); Klein, Wolfram, 85579 Neubiberg (DE); Lorenzi, Juan Manuel, 80796 München (DE); Pasch, Theresa, 80799 München (DE)
(74) Vertreter: Siemens Patent Attorneys

(57) **Zusammenfassung**

Die Erfindung betrifft ein Verfahren zum Kommunizieren zwischen einer ersten Person (12) und einer zweiten Person (14) mittels eines Kommunikationssystems (10), mit den Schritten:
- Bereitstellen einer erweiterten Realitätseinrichtung (16) des Kommunikationssystems (10) für die erste Person (12);
- Erfassen der Umgebung (22) der ersten Person (12) mittels einer Erfassungseinrichtung (26) der erweiterten Realitätseinrichtung (16);
- Bereitstellen einer virtuellen Realitätseinrichtung (18) des Kommunikationssystems (10) für die zweite Person (14);
- Übertragen der erfassten Umgebung (22) von der erweiterten Realitätseinrichtung (16) an die virtuelle Realitätseinrichtung (18) mittels eines Netzwerks (20) des Kommunikationssystems (10);
- Anzeigen der erfassten Umgebung (22) auf der virtuellen Realitätseinrichtung (18);
- Erfassen einer Aktion (30) der zweiten Person (14) mittels einer weiteren Erfassungseinrichtung (32) der virtuellen Realitätseinrichtung (18) in Abhängigkeit von der angezeigten Umgebung (22);
- Übertragen der erfassten Aktion (30) von der virtuellen Realitätseinrichtung (18) an die erweiterte Realitätseinrichtung (16) mittels des Netzwerks (20); und
- Anzeigen der erfassten Aktion (30) mittels der erweiterten Realitätseinrichtung (16).

Ferner betrifft die Erfindung ein Computerprogrammprodukt, ein computerlesbares Speichermedium sowie ein Kommunikationssystem (10).

## Beschreibung

Die Erfindung betrifft ein Verfahren zum Kommunizieren zwischen einer ersten Person und einer zweiten Person mittels eines Kommunikationssystems gemäß dem geltenden Patentanspruch 1. Ferner betrifft die Erfindung ein entsprechendes Computerprogrammprodukt, ein entsprechendes computerlesbares Speichermedium sowie ein entsprechendes Kommunikationssystem.

Industrieanlagen und -maschinen werden weltweit ausgeliefert und nach Inbetriebnahme sitzen entsprechende Experten für den Betrieb solcher Anlagen meist direkt nicht vor Ort. Auf routinemäßige Wartungsarbeiten kann das Personal vor Ort geschult werden und ein Dokument mit Handlungsanweisungen kann zur Verfügung gestellt werden. Es kann aber im Rahmen einer Wartung auch zu unerwarteten Fehlern kommen oder noch schlimmer, es gibt einen plötzlichen, seltenen Maschinenfehler oder sogar ein Ausfall zwischen standardmäßigen Wartungsintervallen. In diesem Fall findet der geschulte Mitarbeiter vor Ort keine Lösung und muss einen Experten, welcher meist nicht am Ort der Anlage ist, konsultieren. Die Erfahrung dieser Experten ist nötig, um das technische Problem der Anlage zu lösen. Auch ein Experte wird nicht auf Anhieb die Lösung des Problems erkennen und es sind mehrere Untersuchungen und Maßnahmen an der Maschine nötig, um wieder einen fehlerfreien Betrieb zu ermöglichen.

Ferner kann auch im privaten Bereich beispielsweise bei Haushaltsgeräten eine entsprechende Wartung von einem Techniker durchgeführt werden. Beispielsweise kann bei einem defekten Haushaltsgerät die Privatperson selbst Hand anlegen, jedoch bei entsprechend größeren Fehlern an dem Haushaltsgerät, ist es notwendig, einen entsprechenden Techniker für die Reparatur beziehungsweise Wartung zu konsultieren.

Beide bekannten Lösungen sind sehr zeit- und kostenintensiv, da nicht schnell eine Reparatur vor Ort durchgeführt werden kann.

Aus dem Stand der Technik sind bereits sogenannten Augmented-Reality-basierende Systeme, die die Kommunikation zwischen einer ersten Person und einer zweiten Person erleichtern, bekannt. Diese Augmented-Reality-Systeme, welche auch als erweiterte Realität bezeichnet werden, dienen dabei zur Kommunikation, beispielsweise zwischen dem Techniker vor Ort und dem Experten. Vor Ort kann ein entsprechender Techniker mit Geräten, wie beispielsweise einem Tablet, einem Handy oder auch einer Augmented-Reality-Brille, über die integrierte Kamera ein Live-Video der Anlage an den Experten übertragen. Außerdem kann eine Telefon-/Audio-Verbindung zwischen den beiden Personen bestehen, über die der Experte Anweisungen geben kann oder der Techniker das Video mit weiteren Beschreibungen anreichert. Es existieren auch bereits Systeme zur Echtzeit-Übersetzung der Telefonie, sodass Techniker und Experte jeweils in ihrer favorisierten Sprache kommunizieren können und es nicht zu Verständnisproblemen kommt.

Der sogenannte Experte kann in dem Live-Video Bemerkungen, Hinweise, Pfeile oder dergleichen einfügen, die dem Techniker dann über sein Augmented-Reality-System angezeigt werden können.

Außerdem kann der Experte relevante Dokumente wie Zeichnungen, Schaltpläne, Datenblätter oder CAD-Modelle teilen und diese werden dem Techniker dann auch über sein Augmented-Reality-Gerät direkt angezeigt.

Aufgabe der vorliegenden Erfindung ist es, ein Verfahren, ein Computerprogrammprodukt, ein computerlesbares Speichermedium sowie ein Kommunikationssystem zu schaffen, mittels welchen eine Kommunikation zwischen einer ersten Person und einer zweiten Person verbessert wird.

Diese Aufgabe wird durch ein Verfahren, ein Computerprogrammprodukt, ein computerlesbares Speichermedium sowie ein Kommunikationssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Kommunizieren zwischen einer ersten Person und einer zweiten Person mittels eines Kommunikationssystems. Es erfolgt das Bereitstellen einer erweiterten Realitätseinrichtung des Kommunikationssystems für die erste Person. Es wird die Umgebung der ersten Person mittels einer Erfassungseinrichtung der erweiterten Realitätseinrichtung erfasst. Es wird eine virtuelle Realitätseinrichtung des Kommunikationssystems für die zweite Person bereitgestellt. Es erfolgt das Übertragen der erfassten Umgebung von der erweiterten Realitätseinrichtung an die virtuelle Realitätseinrichtung mittels eines Netzwerks des Kommunikationssystems. Die erfasste Umgebung wird auf der virtuellen Realitätseinrichtung angezeigt. Eine Aktion der zweiten Person wird in Abhängigkeit von der angezeigten Umgebung mittels der virtuellen Realitätseinrichtung erfasst. Es erfolgt das Übertragen der erfassten Aktion von der virtuellen Realitätseinrichtung an die erweiterte Realitätseinrichtung mittels des Netzwerks und das Anzeigen der erfassten Aktion mittels der erweiterten Realitätseinrichtung.

Somit kann eine vereinfachte/verbesserte Kommunikation zwischen der ersten Person und der zweiten Person realisiert werden. Insbesondere kann die erweiterte Realitätseinrichtung als sogenannte Augmented-Reality-Einrichtung bereitgestellt werden. Insbesondere kann die erweiterte Realitätseinrichtung als Augmented-Reality-Brille (AR-Brille) ausgebildet sein. Die virtuelle Realitätseinrichtung kann insbesondere in Form einer VR-Einrichtung, insbesondere in Form einer VR-Brille (Virtual Reality) bereitgestellt werden. Bei dem Netzwerk kann es sich sowohl um ein drahtgebundenes Netzwerk als auch bevorzugt um ein drahtloses Netzwerk, beispielsweise ein mobiles Netzwerk beziehungsweise lokales Netzwerk, beispielsweise WiFi, handeln.

Insbesondere erfolgt somit die Kommunikation derart, dass die Umgebung der ersten Person mittels beispielsweise an der erweiterten Realitätseinrichtung ausgebildeten Kameras, beziehungsweise mit einer Kamera, insbesondere in einem 360-Grad-Winkel entsprechend erfasst wird. Diese Umgebung wird dann wiederum an die virtuelle Realitätseinrichtung übertragen. Die zweite Person trägt insbesondere die virtuelle Realitätseinrichtung entsprechend derart, dass sich die zweite Person in der virtuellen Realität der erfassten Umgebung virtuell befindet. Es kann dann eine entsprechende Aktion, beispielsweise eine Bewegung der zweiten Person, mittels ebenfalls einer Kamera an der virtuellen Realitätseinrichtung erfasst werden. Die Aktion kann dann entsprechend an die erweiterte Realitätseinrichtung übertragen werden. Die Aktion wird dann wiederum an der erweiterten Realitätseinrichtung angezeigt.

Insbesondere wird bei der erweiterten Realität zumindest eine virtuelle Information der tatsächlich wahrgenommenen Realität überlagert. Mit anderen Worten sieht die erste Person die tatsächliche Umgebung mit zumindest einer überlagerten Information. Bei der virtuellen Realität hingegen handelt es sich insbesondere um eine "Kopie" der Umgebung der ersten Person, welche der zweiten Person angezeigt wird, sodass sich die zweite Person virtuell in der Umgebung der ersten Person befindet. Es handelt sich somit um eine Gesamtüberblendung der Realität der zweiten Person über die virtuelle Realität. Im Folgenden wird ein reines Ausführungsbeispiel für die Nutzung des Kommunikationssystems aufgezählt. Die Nutzung des Kommunikationssystems ist dabei nicht auf den entsprechenden Fachbereich begrenzt.

Die erste Person kann beispielsweise ein Techniker sein und die zweite Person kann ein entsprechender Experte sein. Beispielsweise kann in der Umgebung der ersten Person eine entsprechende Maschine beziehungsweise ein Gerät vorhanden sein, welches beispielsweise defekt ist. Die erste Person versucht dann mit der zweiten Person zu kommunizieren, um beispielsweise eine entsprechende Ferndiagnose und Fernreparatur für diese Maschine durchführen zu können. Mittels der erweiterten Realitätseinrichtung wird die Umgebung mit der Maschine entsprechend erfasst und als virtuelle Realität an die virtuelle Realitätseinrichtung für die zweite Person über das Netzwerk übertragen. Die zweite Person befindet sich somit virtuell in dem Raum der ersten Person mit der defekten Maschine. Die zweite Person kann dann entsprechende Aktionen, beispielsweise Bewegungen, für Reparaturen oder dergleichen durchführen, welche über die virtuelle Realitätseinrichtung erfasst werden. Diese Bewegungen beziehungsweise Reparaturen können dann wiederum an die erste Person übertragen werden. Die erste Person sieht somit in der erweiterten Realität, insbesondere direkt in der Umgebung, die entsprechenden Bewegungen als Überlagerung der tatsächlichen Umgebung, wodurch die erste Person die Aktion in der Umgebung und beispielsweise an der Maschine nachvollziehen kann und somit beispielsweise selbst Hand anlegen kann und entsprechende Reparaturen durchführen kann, so wie vorgezeigt durch die erste Person.

Insbesondere kann somit vorgesehen sein, dass die erste Person die entsprechende erweiterte Realitäts-Brille mit integrierten dreidimensionalen Kameras, sowie einem Headset zur verbalen Kommunikation trägt. Mittels der dreidimensionalen Kamera nimmt er ein dreidimensionales Video seiner Umgebung auf, welches dann an die virtuelle Realitäts-Brille des Experten übertragen wird. Für den Experten fühlt es sich somit an, als sei er selbst vor Ort und kann sich einen realen Überblick über die Situation verschaffen. Der Experte trägt wiederum die virtuelle Realitäts-Brille, ebenfalls inklusive Headset, und befindet sich quasi virtuell vor Ort bei der Anlage. Er kann sich frei im Raum bewegen und so näher an die Anlage herangehen und alles aus einem anderen Blickwinkel betrachten. Durch das 360-Grad-dreidimensionale Video ist er nicht nur auf den Blickwinkel des Technikers beschränkt.

Insbesondere hat das erfindungsgemäße Verfahren den Vorteil, dass die zweite Person nicht nur ein Video der Umgebung sieht, sondern durch das aufgenommene dreidimensionale Szenario sich die zweite Person über die virtuelle Realitätseinrichtung frei am Ort der Umgebung, zumindest virtuell, bewegen kann und seinen eigenen Blickwinkel wählt. Die Effizienz der Wartung wird somit gesteigert, da die zweite Person so agieren kann, als wäre sie selbst vor Ort und nicht durch das Blickfeld des Technikers beziehungsweise der ersten Person eingeschränkt. So können alle, insbesondere komplexe, Reparaturarbeiten remote stattfinden und es ist nicht mehr notwendig, dass speziell ausgebildete Experten zum Ort der Anlage beziehungsweise Geräte reisen. Dadurch kann der CO2-Fußabdruck deutlich reduziert werden.

Ferner kann durch Motion-Capturing-Handschuhe zur Bewegungserfassung der zweiten Person der Experte selbst die Reparatur im virtuellen Raum durchführen und die Bewegung wird auf die reale Anlage projiziert. Die erste Person muss so nur den Ausführungen des Experten folgen. Dies hat den Vorteil, dass die Reparatur deutlich schneller stattfinden kann, da die erste Person nur den Handbewegungen des Experten folgen muss. Außerdem werden Fehler vermieden. Die erste Person muss ferner keine speziell ausgebildete Fachkraft sein. Des Weiteren können auch mehrere Experten mit unterschiedlichem Know how eingebunden werden, um die Reparatur zu beschleunigen. Ferner können auch gefährliche und schwierige/komplexe Reparaturen ad hoc ausgeführt werden.

Einen weiteren Vorteil bietet die Verknüpfung von Betriebssimulationsdaten mit den Wartungs- beziehungsweise Reparaturarbeiten. Dadurch, dass verschiedene Lösungen bereits beispielsweise an einem digitalen Zwilling vorab und simulativ/virtuell getestet werden können, kann die optimale Lösung gefunden werden. Dadurch können Nacharbeiten oder erneut auftretende Fehler vermieden werden, was zu einer Kosteneinsparung führt.

Durch Abspeichern und Archivieren dieser virtuellen Wartungsunterstützungs-Aufnahmen können die weiteren nachgeschalteten Prozesse, wie Fehleranalyse, Spezialschulungen und Best Practice-Sharing initiiert werden. Dies hat den Vorteil, dass eine weitere Nutzung der Reparatur-Erkenntnisse, Know how-Ausbau, eine Qualitätssicherung sowie ein Lernen aus Fehlern realisiert werden kann.

Gemäß einer vorteilhaften Ausgestaltungsform wird zusätzlich mittels der erweiterten Realitätseinrichtung und der virtuellen Realitätseinrichtung eine Sprachkommunikation zwischen der ersten Person und der zweiten Person bereitgestellt. Beispielsweise kann die erweiterte Realitätseinrichtung sowie die virtuelle Realitätseinrichtung ein entsprechendes Headset (Kopfhörer) zur Kommunikation aufweisen. Es ist dabei auch möglich, dass beispielsweise entsprechende unterschiedliche Sprachen im Wesentlichen in Echtzeit übersetzt werden, sodass die erste Person und die zweite Person in einer jeweils bevorzugten Sprache kommunizieren. Somit kann zuverlässig eine Kommunikation zwischen der ersten Person und der zweiten Person realisiert werden.

Eine weitere vorteilhafte Ausgestaltungsform sieht vor, dass die Aktion der zweiten Person in der angezeigten virtuellen Umgebung unabhängig von einer weiteren Aktion der ersten Person in der Umgebung erfasst wird. Insbesondere ist hierzu vorgesehen, da sich die zweite Person lediglich virtuell vor Ort befindet, so dass diese sich im virtuellen Raum frei bewegen kann und beispielsweise näher an entsprechende Gegenstände im virtuellen Raum herangehen kann relativ zur ersten Person und zur erfassten Umgebung und auch die Gegenstände aus einem anderen Blickwinkel betrachten kann, als die erste Person. Unabhängig von einer Bewegung beziehungsweise Orientierung der ersten Person kann somit die zweite Person unterschiedliche Blickwinkel und Positionen virtuell einnehmen.

Somit kann beispielsweise vorteilhaft eine potentielle Reparatur eines Gegenstands/Geräts durchgeführt werden.

Ferner hat es sich als vorteilhaft erwiesen, wenn zumindest eine Handbewegung der zweiten Person als Aktion erfasst wird. Beispielsweise kann die zweite Person entsprechende Motion-Capturing-Handschuhe, insbesondere sogenannte Bewegungserfassungshandschuhe, tragen, die die exakte Bewegung der Hände und die Position der Hand in Bezug auf die reale Umgebung aufnehmen. Die Bewegung der Hände wird dann der ersten Person als erweiterte Realität, beispielsweise in Form eines Hologramms, in seiner realen Umgebung an der exakten Position angezeigt/überlagert. Somit kann die erste Person den Bewegungen der zweiten Person genau folgen und beispielsweise eine Reparatur fachgemäß ausführen.

Ebenfalls vorteilhaft ist, wenn zumindest ein Gerät in der Umgebung erfasst wird und das Gerät als virtuelles Gerät in der virtuellen Realitätseinrichtung angezeigt wird und eine Aktion der zweiten Person an dem virtuellen Gerät erfasst wird und die erfasste Aktion an dem virtuellen Gerät als erweiterte Realität an dem Gerät für die erste Person angezeigt wird. Somit kann das Kommunikationssystem für beispielsweise einen Reparaturfall des Geräts genutzt werden. Das echte Gerät wird somit in der Umgebung der ersten Person erfasst und als virtuelles Gerät in der virtuellen Realitätseinrichtung der zweiten Person angezeigt. Die zweite Person kann dann virtuell eine Aktion an dem virtuell angezeigten Gerät durchführen, welche wiederum entsprechend erfasst wird. Diese erfasste Aktion an dem virtuellen Gerät wird dann wiederum als erweiterte Realität an dem Gerät für die erste Person angezeigt, wodurch diese wiederum die entsprechenden Reparaturmaßnahmen beziehungsweise Aktionen nachahmen kann und somit eine Reparatur auch per Fernkommunikation durchführen kann.

Es hat sich weiterhin als vorteilhaft erwiesen, wenn die an dem virtuellen Gerät erfasste Aktion mit dem Gerät auf einer erweiterten Realitätseinrichtung optisch hervorgehoben wird.

Beispielsweise kann ein entsprechendes Bauteil am Gerät, welches durch die zweite Person beispielsweise abgeschraubt, angeschraubt, aufgeklappt oder dergleichen wird, optisch hervorgehoben werden. Ferner kann beispielsweise auch eine virtuelle Hand der zweiten Person optisch hervorgehoben werden so wie auch entsprechende Werkzeuge optisch hervorgehoben werden können. Das optische Hervorheben kann beispielsweise durch entsprechende Farben beziehungsweise Aufhellungen oder Abdunklungen in der erweiterten Realität durchgeführt werden. Somit kann die erste Person hocheffizient die Aktion wahrnehmen.

Weiterhin vorteilhaft ist, wenn zumindest ein Gerät in der Umgebung erfasst wird und ein digitaler Zwilling für das Gerät für die zweite Person in der virtuellen Realitätseinrichtung bereitgestellt wird. Bei dem digitalen Zwilling handelt es sich insbesondere um eine digitale Nachbildung des tatsächlichen Geräts. Insbesondere werden somit das Gerät und entsprechende Parameter digital bereitgestellt, wodurch die zweite Person entsprechende Adaptionen am digitalen Zwilling durchführen kann. Insbesondere existiert somit ein digitaler Zwilling des beispielsweise zu reparierenden Geräts. Somit können entsprechende Aktionen am digitalen Zwilling zuverlässig simuliert werden, wodurch beispielsweise entsprechende Auswirkungen der Aktion berechnet und ausgewertet werden können, bevor diese tatsächlich am Gerät durchgeführt werden. Dies ermöglicht eine verbesserte Reparatur des Geräts.

Ebenfalls vorteilhaft ist, wenn mittels des digitalen Zwillings das erfasste Gerät in Abhängigkeit von einer Eingabe der zweiten Person simuliert wird. Eine Simulation des Betriebs des digitalen Zwillings bei gegebenen Betriebsparametern aus realen Anlageparametern kann insbesondere dazu genutzt werden, mögliche Ursachen für beispielsweise den Ausfall beziehungsweise den Fehler einzugrenzen oder vorherzusagen. Dies kann der zweiten Person helfen, den exakten Fehler zu identifizieren und geeignete Maßnahmen zu suchen. Falls mehrere Lösungen infrage kommen, kann der Experte beziehungsweise die zweite Person am virtuellen Zwilling verschiedene Maßnahmen simulieren und so die optimale Lösung identifizieren. Das virtuelle Modell der Anlage wird der zweiten Person auch über die entsprechende virtuelle Realitäts-Brille zur Verfügung gestellt und er kann mit diesem interagieren. Ansichten, die auch für die erste Person relevant sind, kann er diesem auf der Augmented-Reality-Brille freischalten, sodass diese auf die reale Anlage projiziert werden.

Ferner hat es sich als vorteilhaft erwiesen, wenn zumindest ein sicherheitskritischer Parameter am digitalen Zwilling während der Simulation erfasst wird und der sicherheitskritische Parameter zusätzlich mit an die erweiterte Realitätseinrichtung übertragen wird. Insbesondere kann somit die Simulation des Betriebs des Geräts auch dazu genutzt werden, Gefahrenpotentiale bei der Reparatur zu identifizieren. Insbesondere kann auch ein Worst-Case-Szenario beziehungsweise ein besonders schwieriges Szenario für die Reparatur simuliert und eingeübt werden. Dies kann beispielsweise entsprechende sicherheitskritische Parameter bezüglich hohen Temperaturen oder sicherheitskritische Parameter bezüglich Spannung oder Strom an entsprechenden Komponenten beziehungsweise gefährliche Kühl- oder Hydraulikflüssigkeiten umfassen. Diese sicherheitskritischen Parameter werden für die erste Person über die entsprechende erweiterte Realitätseinrichtung angezeigt, sodass hierbei die Sicherheit während der Reparatur für die erste Person erhöht ist.

Ferner hat es sich als vorteilhaft erwiesen, wenn zumindest ein Gerät in der Umgebung erfasst wird und zumindest ein Dokument für das Gerät in der virtuellen Realitätseinrichtung zum Abrufen bereitgestellt wird. Beispielsweise kann das Dokument Zeichnungen, Schaltpläne, Datenblätter sowie CAD-Modelle umfassen. Somit kann die zweite Person auf entsprechende Unterlagen bezüglich des Geräts zurückgreifen und somit effizient eine Reparatur des Geräts virtuell durchführen.

Es hat sich weiterhin als vorteilhaft erwiesen, wenn eine durch die erste Person durchgeführte Aktion gespeichert und dokumentiert wird. Insbesondere kann nach der Durchführung der Wartung beziehungsweise Reparatur der digitale Zwilling ebenfalls basierend auf den getätigten Änderungen an der Anlage angepasst werden. Insbesondere bleibt somit der digitale Zwilling immer auf dem aktuellen Stand und bildet den realen Zustand der Anlage so exakt wie möglich ab. Dieser Wartungsvorgang kann multimedial dokumentiert beziehungsweise archiviert werden und für nachfolgende Schulungen oder Fehldokumentationen oder ähnlichem archiviert, aufbereitet und weiterverwendet werden.

Ebenfalls vorteilhaft ist, wenn die Kommunikation zwischen der ersten Person und der zweiten Person im Wesentlichen in Echtzeit durchgeführt wird. Unter im Wesentlichen in Echtzeit ist insbesondere zu verstehen, dass beispielsweise Latenzzeiten im Netzwerk unberücksichtigt bleiben. Dies bedeutet, dass die erste Person beziehungsweise die zweite Person keine aufgezeichneten und vergangenen Bilder beziehungsweise Videos erhält, sondern dass diese direkt im Wesentlichen in Echtzeit entsprechend übertragen werden. Dadurch kann eine zuverlässige Kommunikation zwischen der ersten Person und der zweiten Person durchgeführt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung auch ein computerlesbares Speichermedium mit einem Computerprogrammprodukt nach dem vorhergehenden Aspekt.

Ein nochmals weiterer Aspekt der Erfindung betrifft ein Kommunikationssystem zum Kommunizieren zwischen einer ersten Person und einer zweiten Person, mit zumindest einer erweiterten Realitätseinrichtung, einer virtuellen Realitätseinrichtung und einem Netzwerk, wobei das Kommunikationssystem zum Durchführen eines Verfahrens nach dem vorhergehenden Aspekt ausgebildet ist. Insbesondere wird das Verfahren mittels des Kommunikationssystems durchgeführt.

Das Kommunikationssystem weist ebenfalls zumindest eine elektronische Recheneinrichtung, beispielsweise eine zentrale elektronische Recheneinrichtung auf, welche zum Steuern der Kommunikation ausgebildet ist.

Im Rahmen der vorliegenden Offenbarung kann ein Objekterkennungsalgorithmus, beispielsweise zum Erkennen des Geräts, als ein Computeralgorithmus verstanden werden, der in der Lage ist, eines oder mehrere Objekte innerhalb eines bereitgestellten Eingangsdatensatzes, beispielsweise Eingangsbildes, zu identifizieren und zu lokalisieren, beispielsweise indem er entsprechende Begrenzungsboxen oder Bereiche von Interesse, ROI (englisch: "region of interest"), festlegt und insbesondere jeder der Begrenzungsboxen eine entsprechende Objektklasse zuordnet, wobei die Objektklassen aus einem vordefinierten Satz von Objektklassen ausgewählt werden können. Dabei kann die Zuweisung einer Objektklasse zu einer Begrenzungsbox derart verstanden werden, dass ein entsprechender Konfidenzwert oder eine Wahrscheinlichkeit dafür, dass das innerhalb der Begrenzungsbox identifizierte Objekt zu der entsprechenden Objektklasse gehört, bereitgestellt wird. Zum Beispiel kann der Algorithmus für eine gegebene Begrenzungsbox für jede der Objektklassen einen solchen Konfidenzwert oder eine Wahrscheinlichkeit bereitstellen. Die Zuweisung der Objektklasse kann zum Beispiel die Auswahl oder Bereitstellung der Objektklasse mit dem größten Konfidenzwert oder der größten Wahrscheinlichkeit beinhalten. Alternativ kann der Algorithmus auch lediglich die Begrenzungsboxen festlegen, ohne eine entsprechende Objektklasse zuzuordnen.

Unter einer Recheneinheit/elektronischer Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:

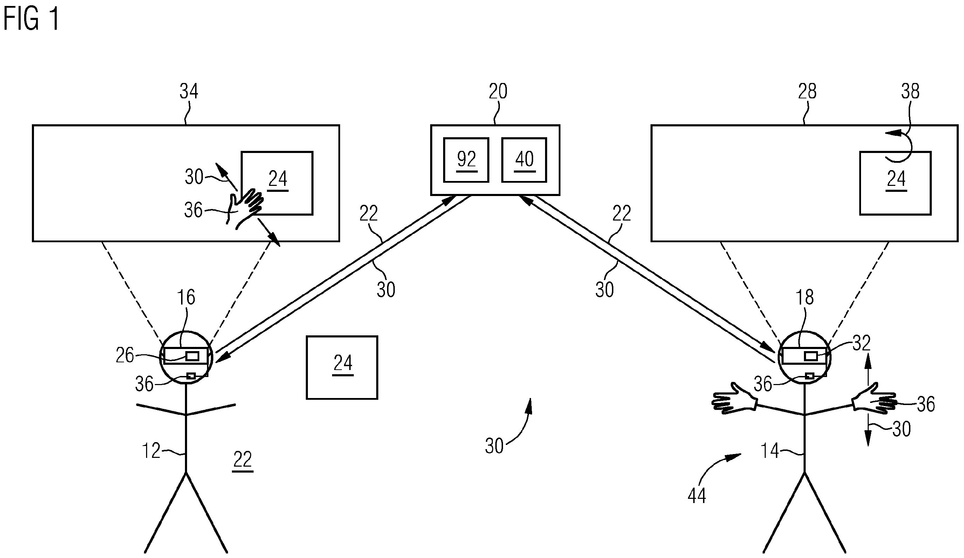

- FIG 1: eine schematische Ansicht einer Ausführungsform eines Kommunikationssystems.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

FIG 1 zeigt eine schematische Ansicht einer Ausführungsform eines Kommunikationssystems 10. Das Kommunikationssystem 10 ist zum Kommunizieren zwischen einer ersten Person 12 und einer zweiten Person 14 ausgebildet. Das Kommunikationssystem 10 weist zumindest eine erweiterte Realitätseinrichtung 16, eine virtuelle Realitätseinrichtung 18 sowie ein Netzwerk 20 auf. Ferner weist das Kommunikationssystem 10 zumindest eine elektronische Recheneinrichtung auf.

Insbesondere befinden sich die erste Person 12 und die zweite Person 14 an unterschiedlichen Orten.

Im folgenden Ausführungsbeispiel ist insbesondere das Verfahren zum Kommunizieren zwischen der ersten Person 12 und der zweiten Person 14 dargestellt. Es erfolgt das Bereitstellen der erweiterten Realitätseinrichtung 16 des Kommunikationssystems 10 für die erste Person 12. Es wird die Umgebung 22, beispielsweise mit einem Gerät 24, der ersten Person 12 mittels einer Erfassungseinrichtung 26 der erweiterten Realitätseinrichtung 16 erfasst. Es erfolgt das Bereitstellen der virtuellen Realitätseinrichtung 18 für die zweite Person 14. Die erfasste Umgebung 22 wird von der erweiterten Realitätseinrichtung 16 an die virtuelle Realitätseinrichtung 18 übertragen, wobei dies insbesondere mittels des Netzwerks 20 durchgeführt wird. Das Netzwerk 20 kann dabei insbesondere als mobiles Netzwerk 20 oder auch als lokales Netzwerk 20 ausgebildet sein. Alternativ oder ergänzend kann das Netzwerk 20 als drahtgebundenes Netzwerk 20 ausgebildet sein. Es erfolgt dann das Anzeigen der erfassten Umgebung 22 auf der virtuellen Realitätseinrichtung 18 insbesondere als sogenannte virtuelle Umgebung 28. Es erfolgt das Erfassen einer Aktion 30 der zweiten Person 14 mittels einer weiteren Erfassungseinrichtung 32 der virtuellen Realitätseinrichtung 18 in Abhängigkeit von der angezeigten Umgebung 22. Die erfasste Aktion 30 wird von der virtuellen Realitätseinrichtung 18 an die erweiterte Realitätseinrichtung 16 mittels des Netzwerks 20 übertragen. Es erfolgt das Anzeigen der erfassten Aktion 30 mittels der erweiterten Realitätseinrichtung 16 insbesondere als erweiterte Realität 34.

Insbesondere zeigt die FIG 1, dass eine Handbewegung, insbesondere einer Hand 36 der zweiten Person 14, als Aktion 30 erfasst werden kann.

Ferner kann vorgesehen sein, dass zusätzlich mittels der erweiterten Realitätseinrichtung 16 und der virtuellen Realitätseinrichtung 18 eine Sprachkommunikation 36 zwischen der ersten Person 12 und der zweiten Person 14 bereitgestellt wird.

Des Weiteren ist gezeigt, dass die Aktion 30 der zweiten Person 14 in der angezeigten virtuellen Umgebung 28 unabhängig von einer weiteren Aktion der ersten Person 12 in der Umgebung 22 erfasst wird. Dies ist vorliegend insbesondere durch den Pfeil 38 dargestellt.

Des Weiteren zeigt die FIG 1 insbesondere, dass zumindest das Gerät 24 in der Umgebung 22 erfasst wird und das Gerät 24 als virtuelles Gerät 24 in der virtuellen Realitätseinrichtung 18 angezeigt wird und eine Aktion 30 der zweiten Person 14 an dem virtuellen gezeigten Gerät 24 erfasst wird und die erfasste Aktion 30 an dem virtuellen Gerät 24 als erweiterte Realität 28 an dem Gerät 24 für die erste Person 12 angezeigt wird. Hierbei kann ferner vorgesehen sein, dass die an dem virtuellen Gerät 24 erfasste Aktion 30 mit dem Gerät 24 auf der erweiterten Realitätseinrichtung 16 optisch hervorgehoben wird, beispielsweise farbig hervorgehoben wird.

Ebenfalls kann vorgesehen sein, dass zumindest für das Gerät 24 ein digitaler Zwilling 40 für das Gerät 24 für die zweite Person 14 in der virtuellen Realitätseinrichtung 16 bereitgestellt wird. Mittels des digitalen Zwillings 40 kann das erfasste Gerät 24 in Abhängigkeit von einer Eingabe der zweiten Person 14 simuliert werden. Des Weiteren kann vorgesehen sein, dass zumindest ein sicherheitskritischer Parameter am digitalen Zwilling 40 während der Simulation erfasst wird und der sicherheitskritische Parameter zusätzlich mit an die erweiterte Realitätseinrichtung 16 übertragen wird.

Ferner kann vorgesehen sein, dass zumindest ein Dokument 42 für das Gerät 24 in der virtuellen Realitätseinrichtung 18 zum Abrufen bereitgestellt wird.

Des Weiteren kann vorgesehen sein, dass eine durch die erste Person 12 durchgeführte Aktion gespeichert und dokumentiert wird. Ferner ist die Kommunikation zwischen der ersten Person 12 und der zweiten Person 14 insbesondere im Wesentlichen in Echtzeit durchgeführt.

Insbesondere zeigt somit die FIG 1, dass die erste Person 12 die erweiterte Realitätseinrichtung 16, insbesondere in Form einer AR-Brille (Augmented Reality) mit integrierten 3D-Kameras als Erfassungseinrichtung 26 sowie ein Headset zur Sprachkommunikation 36 aufweist, welches dann an die virtuelle Realitätseinrichtung 16, welche insbesondere in Form einer VR (Virtual Reality)-Brille bereitgestellt wird, der zweiten Person 14 übertragen wird. Die erste Person 12 kann beispielsweise als Techniker angesehen werden und die zweite Person 14 kann als Experte angesehen werden. Für die zweite Person 14 fühlt es sich somit so an, als sei die zweite Person 14 selbst vor Ort und kann sich einen realen Überblick über die Situation verschaffen.

Die zweite Person 14 trägt dabei die VR-Brille, inklusive eines Headsets, und befindet sich quasi virtuell vor Ort bei dem Gerät 24. Sie kann sich frei im Raum bewegen und so näher an das Gerät 24 herangehen und alles aus einem anderen Blickwinkel betrachten. Durch das 360-Grad-dreidimensionale Video ist die zweite Person 14 nicht nur auf den Blickwinkel der ersten Person 12 beschränkt. Zusätzlich besteht eine Sprachkommunikation 36 zwischen den zwei Personen 12, 14.

Des Weiteren kann die zweite Person 14 beispielsweise einen Bewegungserfassungshandschuh 44, welcher auch als Motion-Capturing-Handschuh bezeichnet werden kann, tragen, der die exakte Bewegung der Hand 36 und die Position der Hand 36 in Bezug auf die reale Umgebung 22 erfasst. Die Bewegung der Hände 36 wird dann der ersten Person 12 als erweiterte Realität, insbesondere als Hologramm, in seiner realen Umgebung 22 an der exakten Position angezeigt. Dieser kann so den Bewegungen der zweiten Person 14 genau folgen und beispielsweise eine Reparatur fachgemäß ausführen. Über die Sprachkommunikation 36 kann zum Beispiel die Handbewegung noch durch weitere Kommentare ergänzt werden und es können der ersten Person 12 beziehungsweise der zweiten Person 14 Fragen gestellt werden. Hierbei kann auch beispielsweise eine Echtzeitübersetzung bereitgestellt werden, sollte beispielsweise die erste Person 12 eine unterschiedliche Sprache bevorzugen als die zweite Person 14.

Ferner existiert insbesondere der digitale Zwilling 40 zu der zu reparierenden Anlage beziehungsweise zum Gerät 24. Eine Simulation des Betriebs der virtuellen Anlage bei gegebenen Betriebsparametern aus der realen Anlage kann dazu genutzt werden, mögliche Ursachen für den Ausfall/den Fehler einzugrenzen oder vorherzusagen. Dies kann der zweiten Person 14 helfen, den exakten Fehler zu identifizieren und geeignete Maßnahmen zu suchen. Falls mehrere Lösungen infrage kommen, kann die zweite Person 14 am virtuellen Zwilling 40 verschiedene Maßnahmen simulieren und so die optimale Lösung identifizieren. Das virtuelle Modell des Geräts 24 wird der zweiten Person 14 auch über die entsprechende VR-Brille zur Verfügung gestellt und mit dieser agieren. Ansichten, die auch für die erste Person 12 relevant sind, kann er der ersten Person 12 auf die Augmented-Reality-Brille freischalten, sodass diese auf das reale Gerät 24 projiziert werden können.

Die Simulation des Betriebs des Geräts 24 kann auch dazu genutzt werden, Gefahrenpotentiale bei der Reparatur zu identifizieren. Insbesondere kann auch ein Worst-Case-Szenario beziehungsweise ein besonders schwieriges Szenario für die Reparatur simuliert und eingeübt werden. Dies können beispielsweise Bauteile mit hohen Temperaturen oder unter Spannung/Strom stehende Komponenten oder gefährliche Flüssigkeiten sein. Diese Gefahrenstellen werden für die erste Person 12 über die AR-Brille und beispielsweise auch der zweiten Person 14 über die VR-Brille kenntlich gemacht.

Nach Durchführung der Wartung beziehungsweise Reparatur wird der digitale Zwilling 40 basierend auf den getätigten Änderungen an dem Gerät 24 angepasst. So bleibt der digitale Zwilling 40 immer auf dem aktuellen Stand und bildet den realen Zustand des Geräts 24 so exakt wie möglich ab. Dieser Wartungsvorgang kann auch dokumentiert beziehungsweise archiviert werden und für nachfolgende Schulungen oder Fehlerdokumentionen oder ähnlichem archiviert, aufbereitet und weiterverwendet werden.

Im Nachfolgenden werden drei beispielhafte Ausführungen des Kommunikationssystems weiter beschrieben. Beispielsweise kann ein direkter virtueller Support der ersten Person 12 vor Ort durchgeführt werden. Es erfolgt die dreidimensionale Kopplung zwischen der ersten Person 12 und der zweiten Person 14 mit Gestenerkennung, insbesondere dem sogenanntem Motion Capturing, beziehungsweise Steuerung der Hände 36 des Experten 14. Es kann dann ebenfalls eine direkte Gestenübernahme vom Experten 14 durchgeführt werden.

Ein zweiter Anwendungsfall ist die Überprüfung und Prognose der Maßnahmen durch den digitalen Zwilling 40. Eine Reparatur kann zuerst am virtuellen Zwilling 40 überprüft und bezüglich ihrer Wirksamkeit getestet werden. Hierzu können unterschiedliche Reparaturmaßnahmen getestet werden. Es erfolgt dann die Berechnung einer Prognose des zukünftigen Verhaltens des Geräts 24 nach der Reparaturmaßnahme und eventuell eine weitere Verbesserung der Reparatur.

Ein dritter Anwendungsfall ist die virtuelle Schulung von Wartungstechnikern beziehungsweise Ingenieuren. Unter der Annahme, dass eine Expertenschulung vor Ort an den Geräten 24 oder der Anlage nicht möglich ist beziehungsweise zu aufwendig ist, zu teuer oder zu gefährlich ist. Die zu schulenden Techniker können virtuell mit den Experten trainiert und in komplexere Reparatur- oder Wartungsarbeiten eingewiesen werden, ohne dass eine Präsenz am Gerät 24 oder der Anlage notwendig ist.

## Patentansprüche

1. Verfahren zum Kommunizieren zwischen einer ersten Person (12) und einer zweiten Person (14) mittels eines Kommunikationssystems (10), mit den Schritten:
- Bereitstellen einer erweiterten Realitätseinrichtung (16) des Kommunikationssystems (10) für die erste Person (12);
- Erfassen der Umgebung (22) der ersten Person (12) mittels einer Erfassungseinrichtung (26) der erweiterten Realitätseinrichtung (16);
- Bereitstellen einer virtuellen Realitätseinrichtung (18) des Kommunikationssystems (10) für die zweite Person (14);
- Übertragen der erfassten Umgebung (22) von der erweiterten Realitätseinrichtung (16) an die virtuelle Realitätseinrichtung (18) mittels eines Netzwerks (20) des Kommunikationssystems (10);
- Anzeigen der erfassten Umgebung (22) auf der virtuellen Realitätseinrichtung (18);
- Erfassen einer Aktion (30) der zweiten Person (14) mittels einer weiteren Erfassungseinrichtung (32) der virtuellen Realitätseinrichtung (18) in Abhängigkeit von der angezeigten Umgebung (22);
- Übertragen der erfassten Aktion (30) von der virtuellen Realitätseinrichtung (18) an die erweiterte Realitätseinrichtung (16) mittels des Netzwerks (20); und
- Anzeigen der erfassten Aktion (30) mittels der erweiterten Realitätseinrichtung (16).

2. Verfahren nach Anspruch 1, **dadurch gekennzeichnet, dass** zusätzlich mittels der erweiterten Realitätseinrichtung (16) und der virtuellen Realitätseinrichtung (18) eine Sprachkommunikation (36) zwischen der ersten Person (12) und der zweiten Person (14) bereitgestellt wird.

3. Verfahren nach Anspruch 1 oder 2, **dadurch gekennzeichnet, dass**
die Aktion (30) der zweiten Person (14) in der angezeigten virtuellen Umgebung (28) unabhängig von einer weiteren Aktion der ersten Person (12) in der Umgebung (22) erfasst wird.

4. Verfahren nach einem der vorhergehenden Ansprüche, **dadurch gekennzeichnet, dass**
zumindest eine Handbewegung der zweiten Person (14) als Aktion (30) erfasst wird.

5. Verfahren nach einem der vorhergehenden Ansprüche, **dadurch gekennzeichnet, dass**
zumindest ein Gerät (24) in der Umgebung (22) erfasst wird und das Gerät (24) als virtuelles Gerät (24) in der virtuellen Realitätseinrichtung (18) angezeigt wird und eine Aktion (30) der zweiten Person (14) an dem virtuell gezeigten Gerät (24) erfasst wird und die erfasste Aktion (30) an dem virtuellen Gerät (24) als erweiterte Realität (34) an dem Gerät (24) für die erste Person (12) angezeigt wird.

6. Verfahren nach Anspruch 5, **dadurch gekennzeichnet, dass** die an dem virtuellen Gerät (24) erfasste Aktion (30) mit dem Gerät (30) auf der erweiterten Realitätseinrichtung (16) optisch hervorgehoben wird.

7. Verfahren nach einem der vorhergehenden Ansprüche, **dadurch gekennzeichnet, dass**
zumindest ein Gerät (24) in der Umgebung (22) erfasst wird und ein digitaler Zwilling (40) für das Gerät (24) für die zweite Person (14) in der virtuellen Realitätseinrichtung (18) bereitgestellt wird.

8. Verfahren nach Anspruch 7, **dadurch gekennzeichnet, dass** mittels des digitalen Zwillings (40) das erfasste Gerät (24) in Abhängigkeit von einer Eingabe der zweiten Person (14) simuliert wird.

9. Verfahren nach Anspruch 8, **dadurch gekennzeichnet, dass** zumindest ein sicherheitskritischer Parameter am digitalen Zwilling (40) während der Simulation erfasst wird und der sicherheitskritische Parameter zusätzlich mit an die erweitere Realitätseinrichtung (16) übertragen wird.

10. Verfahren nach einem der vorhergehenden Ansprüche, **dadurch gekennzeichnet, dass**
zumindest ein Gerät (24) in der Umgebung (22) erfasst wird und zumindest ein Dokument für das Gerät (24) in der virtuellen Realitätseinrichtung (18) zum Abrufen bereitgestellt wird.

11. Verfahren nach einem der vorhergehenden Ansprüche, **dadurch gekennzeichnet, dass**
zumindest eine durch die erste Person (12) durchgeführte Aktion gespeichert und dokumentiert wird.

12. Verfahren nach einem der vorhergehenden Ansprüche, **dadurch gekennzeichnet, dass**
die Kommunikation zwischen der ersten Person (12) und der zweiten Person (14) im Wesentlichen in Echtzeit durchgeführt wird.

13. Computerprogrammprodukt mit Programmcodemitteln, welche eine elektronische Recheneinrichtung (42) dazu veranlassen, wenn die Programmcodemittel von der elektronischen Recheneinrichtung (42) abgearbeitet werden, ein Verfahren nach einem der Ansprüche 1 bis 12 durchzuführen.

14. Computerlesbares Speichermedium mit einem Computerprogrammprodukt nach Anspruch 13.

15. Kommunikationssystem (10) zum Kommunizieren zwischen einer ersten Person (12) und einer zweiten Person (14), mit zumindest einer erweiterten Realitätseinrichtung (16), einer virtuellen Realitätseinrichtung (18) und einem Netzwerk (20), wobei das Kommunikationssystem (10) zum Durchführen eines Verfahrens nach einem der Ansprüche 1 bis 12 ausgebildet ist.
